# EUROPEAN PATENT APPLICATION

(11) **EP 3 878 684 A1**
(43) Date of publication of application: **15.09.2021**
(21) Application number: 21152690.0
(22) Date of filing: 21.01.2021
(51) Int. Cl.: B60L 53/35, B60L 5/24, B60L 5/42, B60L 53/14

(54) **AUTOMATIC PANTOGRAPH CHARGING SYSTEM FOR CHARGING ELECTRIC VEHICLE**

(30) Priority: 11.03.2020 KR 20200030445
(71) Applicant: Choi, Young Ha, Chungju-si, Chungcheongbuk-do 27382 (KR); Choi, Young Gil, Namyangju-si, Gyeonggi-do 12232 (KR)
(72) Inventor: Choi, Young Ha, Chungju-si, Chungcheongbuk-do 27382 (KR); Choi, Young Gil, Namyangju-si, Gyeonggi-do 12232 (KR)
(74) Representative: Müller Verweyen

(57) **Abstract**

Provided is an automatic pantograph charging system for charging an electric vehicle, capable of efficiently charging a plurality of electric buses using a single or multiple pantograph charging devices by implementing the pantograph charging device for charging the electric bus in a mobile type. By using a pantograph charging device for charging the electric vehicle by supplying charging power to the electric vehicle, which is movably installed in a bridge where the pantograph charging device is installed and a space for moving the pantograph charging device is formed, a battery of the electric vehicle is charged through a direct contact with a contact portion installed in the electric vehicle. A plurality of electric vehicles are sequentially charged in a sequential charging method or according to a charging priority by using a single pantograph charging device, thereby simplifying the electric vehicle charging system and reducing the cost for establishment of the charging system compared to a charging method that charges the electric vehicle by arranging the pantograph charging devices and electric vehicles in one-to-one correspondence.

## Description

### [Technical Field]

The present invention relates to an automatic pantograph charging system for charging an electric vehicle, and more particularly, to an automatic pantograph charging system for charging an electric vehicle, in which a pantograph charging device for charging an electric bus is implemented in a mobile type, thereby efficiently charging a plurality of electric buses using a single pantograph charging device

### [Background Art]

Vehicles using fossil fuels such as gasoline or diesel are causing depletion of fossil fuels and global warming problems, and as a result, regulations on carbon dioxide and emission gases for environmental protection are being strengthened. In order to solve the above problem, electric vehicles are gradually spreading, but a travelling distance that can be implemented with a single charge is still insufficient and the establishment of charging infrastructure is poor, acting as an obstacle to the spread of electric vehicles.

In particular, since buses running on a designated route can sufficiently travel the route with a single charge, the limitation of the travelling distance that can be implemented with one charge is relatively not a problem, and it is relatively easy to establish the charging infrastructure because it is sufficient to establish the charging system at a garage where the buses gather.

As a method for charging an electric bus using a charging system installed in a garage, there are a charging method in which a charger is inserted into a charging port of the electric bus for charging, and a charging method in which charging is performed through a contact.

In particular, the latter is charged using a charging device such as a pantograph.

In general, a plurality of buses may be parked in the garage of electric buses, and when charging is performed by using a pantograph charging device, the electric buses are arranged corresponding to the pantograph charging device.

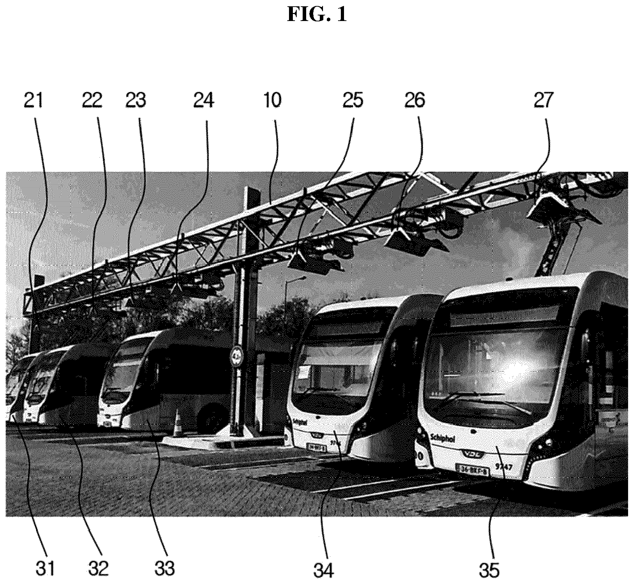

That is, as shown in FIG. 1, a plurality of expensive charging power supply devices 21 to 28 are provided in series in a fixing bar 10, and a pantograph charging device is individually accommodated in each electric bus 31 to 35. In this state, the electric bus is charged in a state in which the charging power supply device and the pantograph charging device are arranged in a one-to-one correspondence. Although seven charging power supply devices are shown, this is one embodiment only, and the charging system can be established by using a larger number of charging power supply devices or a smaller number of charging power supply devices.

However, such an electric bus charging system may increase the manufacturing cost of the electric bus because the pantograph charging devices are accommodated in the electric buses, respectively.

In addition, since the electric bus is charged in a state in which the expensive charging power supply device and the pantograph charging device are arranged in a one-to-one correspondence, the number of electric buses, which can be simultaneously charged, is determined according to the number of charging power supply devices. Therefore, if the charging system is established with a lot of expensive charging power supply devices, there is an advantage that it can charge many electric buses at the same time. However, since the charging power supply devices are relatively expensive, the cost for establishing the charging system is increased and there is space limitation because a large space for installing the charging power supply devices is required.

Meanwhile, techniques previously proposed for a charging system using a pantograph method are disclosed in following <Patent Document 1> to <Patent Document 3>.

<Patent Document 1> provides a method for performing analysis for harmonics, voltage drop, voltage unbalance, fault, and AC by developing a user-defined model of a power supply system using EMTDC. In addition, it is possible to perform a voltage source simulation, a single winding transformer simulation, a feed line simulation, and an AC electric rail load simulation by using an AC electric rail power feed system and an analysis method thereof using EMTDC.

In addition, <Patent Document 2> provides a non-contact power feeding apparatus using a conductive fluid, in which power is received in a non-contact state with respect to a catenary that supplies the power, thereby facilitating maintenance and repair by preventing the catenary from being worn and obviating an environmental problem, such as an aerodynamic noise.

Further, <Patent Document 3> provides a block setting and a power control and vehicle operation control process using a semiconductor device, in which a certain block is set on a route and a vehicle operation is controlled through the movement of the block for the safety and economical and effective power supply of transportation devices, such as buses and railways, and facilities.

In particular, in the case of P-GL, the block is set in units of a vehicle and an organization, in which the block is installed on a catenary wire (an auxiliary line for supporting and maintaining a catenary) or an electric support for supporting the catenary within the length range of the electric support for the electric wire (catenary) to provide a guide line (GL) capable of efficiently suppling electric energy and providing accurate position information of vehicles, and to allow vehicles such as buses to which the GL is applied to have the same functions and effects as railways on general roads.

However, the above related arts can charge a vehicle such as an electric bus by using the pantograph charging method, but the pantograph charging device and the electric bus need to be arranged in a one-to-one correspondence for the charging operation, so that it is necessary to establish a plurality of pantograph charging devices in order to charge a plurality of buses.

In addition, the above disadvantages lead to use a large number of expensive pantograph charging devices, resulting in the increase in establishment of the charging system.

### [Documents of related art]

### [Patent documents]

(Patent Document 1) Korean Patent Registration No. 10-0499383 (Registered on June 25, 2005) (AC ELECTRIC RAILROAD POWER SUPPLY SYSTEM AND ANALYSIS METHOD THEREOF USING EMTDC)
(Patent Document 2) Korean Patent Registration No. 10-1251552 (Registered on April 1, 2013) (NON-CONTACT POWER FEEDING DEVICE USING CONDUCTIVE FLUID)
(Patent Document 3) Korean Unexamined Patent Publication No. 10-2014-0016668 (published on Feb. 10, 2014) (ELECTRICAL POWERING AND WIRELESS METHOD OF BUSES)

### [Disclosure]

### [Technical Problem]

Accordingly, the present invention has been proposed to solve various problems occurring in the electric bus charging method using the general pantograph charging system as described above and the related art, and an object of the present invention is to provide an automatic pantograph charging system for charging an electric vehicle that can efficiently charge a plurality of electric buses using a single pantograph charging device by implementing a pantograph charging device for charging the electric bus in a mobile type.

Another object of the present invention is to provide an automatic pantograph charging system for charging an electric vehicle, which can reduce the cost for establishment of the pantograph charging system by efficiently charging a plurality of buses without using a large number of expensive pantograph charging devices by establishing a one-to-many charging system to charge a plurality of buses using a single pantograph charging system.

### [Technical Solution]

In order to achieve the above object, the "automatic pantograph charging system for charging an electric vehicle " according to the present invention includes a bridge equipped therein with a pantograph charging device for charging the electric vehicle, and formed with a space for moving the pantograph charging device; the pantograph charging device movably installed on the bridge to supply charging power to the electric vehicle; a contact portion installed in the electric vehicle to receive the charging power through a direct contact with the pantograph charging device; and a power bank that converts power supplied through a distributing board into charging power and supplies the charging power to the pantograph charging device.

The bridge may include: a rail configured to move the pantograph charging device; and a plurality of covers to protect the pantograph charging device from an outside.

The pantograph charging device may charge the electric vehicle in a one-to-many charging method that charges the electric vehicle located below while moving along a rail formed on the bridge.

The pantograph charging device may include : a moving device that receives movement information through a communication module and moves along a rail formed on the bridge based on the movement information; a pantograph position adjusting device which has one end connected to the moving device and connects or disconnects a pantograph serving as a charging device to or from the contact portion provided in the electric vehicle; and the pantograph connected to the pantograph position adjusting device to supply charging power when making contact with the contact portion of the electric vehicle.

The moving device may include: a communication module for receiving the movement information through communication; a movement control unit for controlling position movement according to the movement information received through the communication module; and a driving unit that moves the moving device back and forth according to the movement control of the movement control unit, and wherein the communication module may include a wired or wireless communication module.

### [Advantageous Effects]

According to the present invention, the pantograph charging device for charging the electric bus can be implemented in a mobile type, so that a plurality of electric buses can be efficiently charged using a single or a plurality of pantograph charging devices.

In addition, according to the present invention, a one-to-many charging system can be established to charge a plurality of buses with a single pantograph charging system, so that it is possible to efficiently charge a plurality of buses without using a large number of expensive pantograph charging devices, thereby reducing the cost for establishment of the pantograph charging system.

### [Description of Drawings]

FIG. 1 is an exemplary view illustrating charging of an electric vehicle using a conventional pantograph charging system.
FIG. 2 is a view illustrating a configuration of an automatic pantograph charging system for charging an electric vehicle according to the present invention,
FIG. 3 is an exemplary view illustrating charging of an electric vehicle using a pantograph charging device.

### [Modes of the Invention]

Hereinafter, an automatic pantograph charging system for charging an electric vehicle according to a preferred embodiment of the present invention will be described in detail with reference to the accompanying drawings.

In the following description, the terms or words used in the present invention should not be interpreted as being limited to a conventional or dictionary meaning, and the inventor should appropriately define the concept of terms in order to describe the invention in the best way and it should be interpreted as a meaning and concept consistent with the technical idea of the present invention.

Therefore, the embodiments described in the present specification and the configurations shown in the drawings are only preferred embodiments of the present invention, and do not represent all the technical spirit of the present invention, and it should be understood that there are various equivalents and modifications that can replace them at the time of the present application.

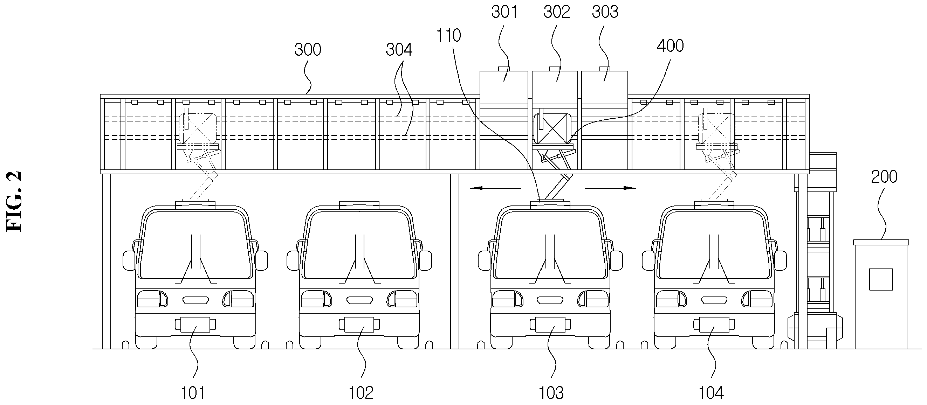

FIG. 2 is a view showing a configuration of an automatic pantograph charging system for charging an electric vehicle according to a preferred embodiment of the present invention, in which a bridge 300 equipped therein with a pantograph charging device 400 for charging electric vehicles 101 to 104 and formed with a space for moving the pantograph charging device 400 is provided. In the present invention, the bridge 300 is configured to have a width for accommodating about 4 electric vehicles, but this is only an example, and the number of electric vehicles accommodated in the bridge can be freely adjusted by varying the width of the bridge.

Actually, the bridge 300 refers to a construction for moving the pantograph charging device 400 accommodated in the bridge 300. Preferably, the bridge 300 is formed higher than a bus of an electric vehicle (for example, an electric bus) charged in a pantograph manner, so that the electric vehicle entering or exiting for charging at the position below the bridge 300 can be prevented from colliding with the bridge 300.

The bridge 300 may include a rail 304 configured to move the pantograph charging device 400 and a plurality of covers 301 to 303 for protecting the pantograph charging device 400 from the outside. The covers 301 to 303 may have a width corresponding to one electric vehicle, and the covers may be installed over the whole area of the bridges with the width corresponding to the electric vehicle that enters or exits. When the pantograph charging device is not used, the covers may be closed to protect the pantograph charging device from the outside, and when the electric vehicle is charged by the pantograph charging device, only the covers at the corresponding position may be opened. Closing and opening of the covers may be achieved by using a power device such as a motor that automatically opens and closes the covers by using electric power. In addition, it is also possible to manually open and close the covers by an operator.

The pantograph charging device 400 may be movably accommodated in the bridge 300 to supply charging power to the electric vehicle 103.

The pantograph charging device 400 may charge the electric vehicles in a one-to-many charging method in which the electric vehicles 101 to 104 located below are charged while moving left and right along the rail 304 formed on the bridge 300.

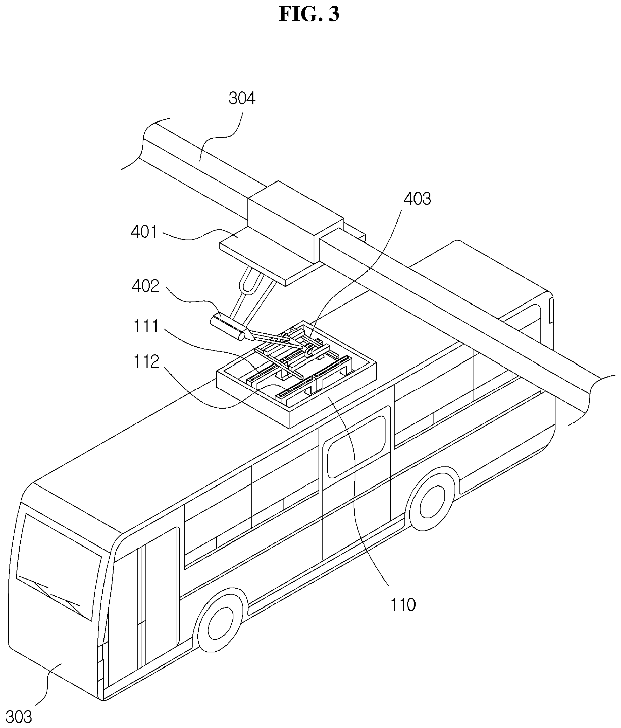

As shown in FIG. 3, the pantograph charging device 400 may include a moving device 401 that receives movement information through a communication module and moves along the rail 304 formed on the bridge 300 based on the movement information, a pantograph position adjusting device 402 which has one end connected to the moving device 401 and connects or disconnects a pantograph 403 serving as a charging device to or from a contact portion 110 provided in the electric vehicle 103, and the pantograph 403 connected to the pantograph position adjusting device 402 to supply charging power when making contact with the contact portion 110 of the electric vehicle 103.

The moving device 401 may include: a communication module for receiving the movement information through communication; a movement control unit for controlling position movement according to the movement information received through the communication module; and a driving unit that moves the moving device back and forth (or left and right) according to the movement control of the movement control unit, and the communication module may include a wired or wireless communication module. The back and forth or left and right may be set based on the viewpoint for the moving direction and the moving direction of the back and forth is the same as the moving direction of left and right.

The moving device 401 may be implemented as a hoist device obtained by integrating a prime mover, a gear reduction device, and a winding barrel.

The contact unit 110 maybe installed in the electric vehicle 103 and receive charging power by making a direct contact with the pantograph charging device 400 to charge a battery. The contact portion 110 may be individually provided in all electric vehicles.

A power bank 2 00 may be provided to convert the power supplied through a distributing board into charging power and supply the charging power to the pantograph charging device 400.

Although not shown in the drawings, a system monitoring device may be further provided between the pantograph charging device 400 and the power bank 200 to monitor the overall charging status of the pantograph charging system and to control the pantograph charging system in case of an emergency. The system monitoring device may use equipment such as a personal computer or use a remote terminal capable of remotely controlling the charging system.

Hereinafter, the operation of the automatic pantograph charging system for charging an electric vehicle according to a preferred embodiment of the present invention configured as described above will be described in detail.

First, the electric vehicle (electric bus) (for example, 103) to be charged is moved to a charging position located below the bridge 300. In order to move the electric vehicle to the charging position, it is mainly used that a vehicle position is displayed at the charging position and a driver moves the electric vehicle to the predetermined charging position. In this case, it is inconvenient for the driver to move the vehicle several times in order to move the electric vehicle to the predetermined position.

Therefore, the electric vehicle can be moved to the predetermined charging position in the way as described above. In addition, in order to relieve the inconvenience of the driver, the electric vehicle can be moved to the predetermined charging position in the other way in which as the driver parks the vehicle near the predetermined position, the pantograph charging device 400 finds the position of the contact portion 110 of the electric vehicle and performs the position correction and then starts the charging. Various methods may be adopted to find the position of the contact portion 110 of the electric vehicle and to correct the position. For example, there may be a method of capturing the contact portion 110 through a camera and correcting the position of the pantograph charging device 400 by searching for an object (contact portion) from captured image information. The position correction may be simply implemented by adjusting the amount of movement of the pantograph charging device 400 back and forth.

As another method of position correction, there are techniques for correcting a position by detecting the position using a proximity sensor, and allowing a driver to determine the precise position of the pantograph by marking a parking line (or facility).

In a state in which the electric vehicle 103 is parked in the charging position, the contact portion 110 of the electric vehicle 103 may be exposed to the outside. In this case, the upper part of the contact portion 110 may be always kept open so that the contact portion 110 may be always exposed to the outside, or a cover may be used to prevent the infiltration of foreign substances from the outside. In case of former, since the contact portion 110 is exposed, there is no need to perform any other operation. In case of latter, it is necessary to open the cover. The cover may be opened in a sliding manner by using a motor. Since it is generally known in the art to open or close the cover in a sliding manner, a detailed description thereof will be omitted. Since the present invention describes the exposure method as an example, there is no need to open the cover.

After the electric vehicle 103 is parked at the charging position, the pantograph charging device 400 may check position information of the electric vehicle to be charged, and move to the position of the electric vehicle 103 to be charged.

Since there is a communication module in the moving device 401 of the pantograph charging device 400 for receiving movement information through communication, movement information may be received through wired or wireless communication. The movement control unit may control the position movement according to the movement information. The movement information may be position information transmitted through an external remote terminal or a system monitoring device . The movement information may include a designation of a vehicle position. For example, the charging position may be specified by designating the position of the electric vehicle 101 as a charging position "01", the position of the electric vehicle 102 as a charging position "02", the position of the electric vehicle 103 as a charging position "03", and the position of the electric vehicle 104 as a charging position "04". Alternatively, the pantograph charging device 400 may start the charging operation from the charging position of the first electric vehicle 101, and then perform the charging operation in the sequence of the electric vehicle 102, the electric vehicle 103, and the electric vehicle 104 when the charging operation for the first electric vehicle 101 is completed. It is assumed that the movement control unit built in the moving device 401 of the pantograph charging device 400 always knows the current position. Since the amount of movement to the charging position is predetermined in consideration of the width of the electric vehicle, the movement control unit may move the pantograph charging device 400 by operating a driving unit including a motor . The driving unit may include a motor and an encoder for checking the position.

In a state in which the pantograph charging device 400 has moved to the predetermined charging position, the covers 301 to 303 provided on the bridge 300 at the corresponding position may be opened. The bridge 300 has a plurality of covers to protect the pantograph charging device 400 accommodated therein. In a state where the covers 301 to 303 are opened, the pantograph position adjusting device 402 having one end connected to the moving device 401 moves down so that the pantograph 403 serving as a charging device is connected to the contact portion 110 provided in the electric vehicle 103. When assuming that the heights of the electric vehicles are all the same, the amount of downward movement of the pantograph position adjusting device 402 may be always the same. The pantograph position adjusting device 402 may move down after receiving movement completion information from the moving device 401 in association with the moving device 401. To this end, the pantograph position adjusting device 402 may also include a communication module, a control device, and a moving member such as a cylinder including a piston and a rod. If the heights of the electric vehicles are different, the amount of downward movement may be adjusted by detecting the distance to the contact portion 110 of the electric vehicle using a distance sensor.

When the pantograph position adjusting device 402 moves down by a predetermined distance, the pantograph 403 coupled to the end of the pantograph position adjusting device 402 makes contact with the contact portion 110, so that the charging power is supplied to contact terminals 111 and 112 of the contact portion 110 by the pantograph 403, thereby charging the battery of the electric vehicle. The electric vehicle charging method using the pantograph 403 may be implemented by utilizing a conventional pantograph charging device.

The charging power for charging the electric vehicle may be supplied through the power bank 200.

The power bank 200 is a power conversion device, and may receive power through a direct connection method without a power distributing facility (a distributing board) and a bus-bar, or may receive power through a wire cable. The power bank 200 may include a power circuit breaker (ACB) that cuts off supply power when excessive voltage is applied to the power supplied from the power distributing facility, an AC-DC converter that converts AC power supplied through the power circuit breaker into DC power, and a DC-DC converter that converts the DC power converted by the AC-DC converter into predetermined DC power to supply the DC power to the pantograph charging device 400.

The AC-DC converter may include an AC-DC converter that is directly connected to the power circuit breaker to receive the supply power and increases the amount of current in a state in which reference voltage is set, and a DC-DC converter that outputs the DC power, in which the amount of current is increased by the AC-DC Convertor, by adjusting the DC power to have a set level.

The power bank 200 that supplies the charging power may directly receive power supplied through the power distributing facility, which is a power supply facility, without a bus bar, or receive the power through a wire cable, and convert the power into the charging power to supply the charging power to the pantograph charging device 400. The Korean Electric Power Corporation (KEPCO), which is a power supplier, supplies power of high-voltage (22. 9 kv), and the power distributing facilities distribute the power to supply the power.

When the electric vehicle 103 has been charged through the pantograph charging device 400, the charging operation is terminated, and the pantograph position adjusting device 402 moves up by a predetermined distance, thereby releasing the connection with the contact portion 110 and the pantograph position adjusting device 402 returns to its original position.

Then, the pantograph charging device 400 moves to the charging position of the next electric vehicle, and when moving to the charging position, the next electric vehicle is charged again through the above-described charging process.

As described above, according to the present invention, a plurality of electric vehicles can be sequentially charged in a sequential charging method or according to a charging priority by using a single pantograph charging device, thereby simplifying the electric vehicle charging system and reducing the cost for establishment of the charging system compared to a charging method that charges the electric vehicle by arranging the pantograph charging devices and electric vehicles in one-to-one correspondence.

Although the present invention made by the present inventor has been described in detail according to the above embodiment, the present invention is not limited to the above embodiment, and it is obvious to those skilled in the art that various changes can be made without departing from the scope of the present invention.

### [Description of reference numerals]

- 101 - 104:: electric vehicle (electric bus)
- 200:: power bank
- 300:: bridge
- 301 to 303:: cover
- 400:: pantograph charging device
- 401:: moving device
- 402:: pantograph position adjusting device
- 403:: pantograph

## Claims

1. An automatic pantograph charging system for charging an electric vehicle such as an electric bus in a pantograph method, the automatic pantograph charging system comprising:
a bridge equipped therein with a pantograph charging device for charging the electric vehicle, and formed with a space for moving the pantograph charging device;
the pantograph charging device movably installed on the bridge to supply charging power to the electric vehicle;
a contact portion installed in the electric vehicle to receive the charging power through a direct contact with the pantograph charging device; and
a power bank that converts power supplied through a distributing board into charging power and supplies the charging power to the pantograph charging device.

2. The automatic pantograph charging system of claim 1, wherein the bridge includes: a rail configured to move the pantograph charging device; and a plurality of covers to protect the pantograph charging device from an outside.

3. The automatic pantograph charging system of claim 1, wherein the pantograph charging device charges the electric vehicle in a one-to-many charging method that charges the electric vehicle located below while moving along a rail formed on the bridge.

4. The automatic pantograph charging system of claim 1, wherein the pantograph charging device includes:
a moving device that receives movement information through a communication module and moves along a rail formed on the bridge based on the movement information;
a pantograph position adjusting device which has one end connected to the moving device and connects or disconnects a pantograph serving as a charging device to or from the contact portion provided in the electric vehicle; and
the pantograph connected to the pantograph position adjusting device to supply charging power when making contact with the contact portion of the electric vehicle.

5. The automatic pantograph charging system of claim 4, wherein the moving device includes:
a communication module for receiving the movement information through communication;
a movement control unit for controlling position movement according to the movement information received through the communication module; and
a driving unit that moves the moving device back and forth according to the movement control of the movement control unit, and
wherein the communication module includes a wired or wireless communication module.
